# EUROPEAN PATENT SPECIFICATION

(11) **EP 1 641 562 B1**
(45) Date of publication and mention of the grant of the patent: **26.12.2018**
(21) Application number: 03741670.8
(22) Date of filing: 13.06.2003
(51) Int. Cl.: B01J 37/00

(54) **METHOD FOR PRODUCING SUPPORTED OXIDE CATALYSTS**
VERFAHREN ZUR HERSTELLUNG VON GETRÄGERTEN OXIDKATALYSATOREN
PROCEDE PERMETTANT DE PRODUIRE DES CATALYSEURS D'OXYDE SUPPORTES

(43) Date of publication of application: 05.04.2006
(73) Proprietor: YARA International ASA, 0213 Oslo (NO)
(72) Inventor: ØYGARDEN, Arne, Hallvard, N-3683 Notodden (NO); PEREZ-RAMIREZ, Javier, E-43007 Tarragona (ES); WALLER, David, N-3931 Porsgrunn (NO); SCHÖFFEL, Klaus, N-3925 Porsgrunn (NO); BRACKENBURY, David, M., N-3941 Porsgrunn (NO)
(74) Representative: Onsagers AS
(86) International application number: PCT/NO2003/000197
(87) International publication number: WO 2004/110622

(56) References cited:
- WO-A1-02/02230
- US-A- 4 520 127
- US-A- 5 128 114
- US-A- 5 128 291
- US-A- 5 808 143
- US-A- 5 965 481
- US-A- 6 107 238
- US-A- 6 130 184
- US-B1- 6 362 128
- US-B1- 6 548 440

## Description

### Field of invention

The present invention relates to a versatile preparation method to produce pellet catalysts with different active phase distribution and controlled porosity. The requirements of active phase distribution and controlled porosity are determined by the intrinsic characteristics of the catalytic reaction (application) of interest and can be tailored with the proposed method.

### Description of the prior art

The preparation of a catalyst takes place in several rather complex stages dependent on a large number of variables difficult to control simultaneously.

Conventionally, the preparation of a catalyst on a bulk scale, involves two main approaches. The first is via a co-precipitation route. The second is via impregnation of a preformed support by an active phase precursor, either by incipient wetness or ion exchange techniques.

By preparation of a catalyst by co-precipitation, the catalyst components are obtained in a solution form and are mixed in the appropriate ratios and concentrations. A catalyst precursor phase, typically a carbonate, hydroxide or oxide, is obtained by adding a precipitating agent to the catalyst solution. Typically, alkali metal hydroxides or carbonates are used as a precipitating agent. The mixing, pH control, and temperature are critical parameters. The catalyst precursor slurry is aged to bring about a more favourable morphology or structure. Flocculants may be added to aid filtration or centrifugation and the solid precursor is separated from the liquid phase.

The precursor is washed to remove undesirable cations or anions. It may be necessary to re-slurry and to carry out ion-exchange procedures to remove adsorbed alkali metal ions. The precursor is dried and then calcined to form an oxide phase. At this stage, the catalyst may be re-slurried to allow the precipitation of additional phases.

If pellets are to be formed by die compaction, the oxide is granulated, to obtain a flowable powder, e.g. by re-slurrying and spray drying or by a fluidised bed or rotary granulator. Processing aids such as lubricants are added and the granulate is formed into pellets, whereafter a thermal treatment is carried out to give the pellets the desired strength.

The basic unit operations for preparation of a catalyst by impregnation are:
Incipient wetness impregnation:
The catalyst support is formed. This will involve many unit operations, including either extrusion and thermal treatment of a support paste or granulation, pelletisation and
thermal treatment of the support phase. The active phase is obtained in the form of a solution. The support phase is impregnated with the active phase solution. The impregnated pellets are dried and thermally treated.

The metal loading of the active metal can be controlled by changing the concentration of the metal precursor in solution. If high concentrations of active phase are desired, or the solubility of the precursor is low, multiple impregnation-thermal treatment cycles may be needed. In addition, the metal content will be difficult to adjust. Multiple cycles may also be required if bimetallic catalysts are to be produced. The most critical step of this method is the drying process. If a uniform distribution of active phase is desired, rapid drying is necessary. This may be difficult in a bulk production process. Slow drying leads to segregation of the active phase to the exterior of the pellet and a nonuniform active phase distribution. This may have a negative influence on the catalytic performance of this material.

Ion exchange:
The catalyst support is formed. The support is soaked in a dilute solution of the active phase. The pH is such, that ion exchange of the active phase occurs with surface groups on the support surface. The pellets are washed to remove active phase ions not adsorbed onto the support surface and thereafter thermally treated. The active phase will tend to be uniformly distributed throughout the pellet, but its concentration will be low. The maximum concentration of the active phase that can be achieved will be limited by the ion-exchange capacity of the support phase and/or the saturation solubility of the active phase solution

Other ways of producing oxide catalysts are also known:
From U.S. patent No. 6107238 it is known a process for manufacturing of an improved attrition resistant catalyst having an oxide-rich surface layer involving forming a slurry comprising; catalyst, catalyst precursor or catalyst support particles (e.g., transition metal oxides), a colloidal oxide sol (e.g., colloidal silica), and a solution of a solvent and solute wherein the solute consists essentially of a precursor of said oxide-rich surface with particle size no greater than 5 nm (e.g., aqueous silicic acid or polysilicic acid) and then spray drying the slurry to form porous microspheres of attrition resistant catalyst; and, calcining the spray dried microspheres. Such a catalyst is particularly useful in oxidation processes wherein the oxidation is performed by an oxidized form of the catalyst and the resulting reduced form of the catalyst is separately regenerated (e.g., two-step vapour phase processes carried out in recirculating solids reactors, transport bed reactors or circulating fluidized bed reactors and the like).

U.S. patent No. 6 130 184 describes a process for the preparation of a cobalt-containing catalyst or catalyst precursor, comprising (a) mixing (1) titania or a titania precursor, (2) a liquid, and (3) a cobalt compound, which is at least partially insoluble in the amount of liquid used, to form a mixture, (b) shaping and drying of the mixture thus-obtained, and (c) calcination of the composition thus obtained. The mixing method could be kneading, mulling or stirring dependent on the solids content of the mixture. The shaping of the catalyst could be pelletising, granulating, extrusion, spray-drying or hot oil dropping method. This method does not arrive at a catalyst with predictable properties, in particular a controlled distribution of metal sites and porosity. Tailoring these parameters is essential for an optimised performance in catalytic applications.

WO02/02230 discloses a N₂O decomposition catalyst comprising a cobalt compound on a cerium oxide support.

### Object of the invention

The object of the invention is to obtain a simple production process suitable for industrial scale production of catalysts. A further object is to obtain supported oxide catalysts with a well-defined active phase distribution and controlled porosity. Another object is to obtain a reproducible and simple production process for N₂O decomposition catalysts.

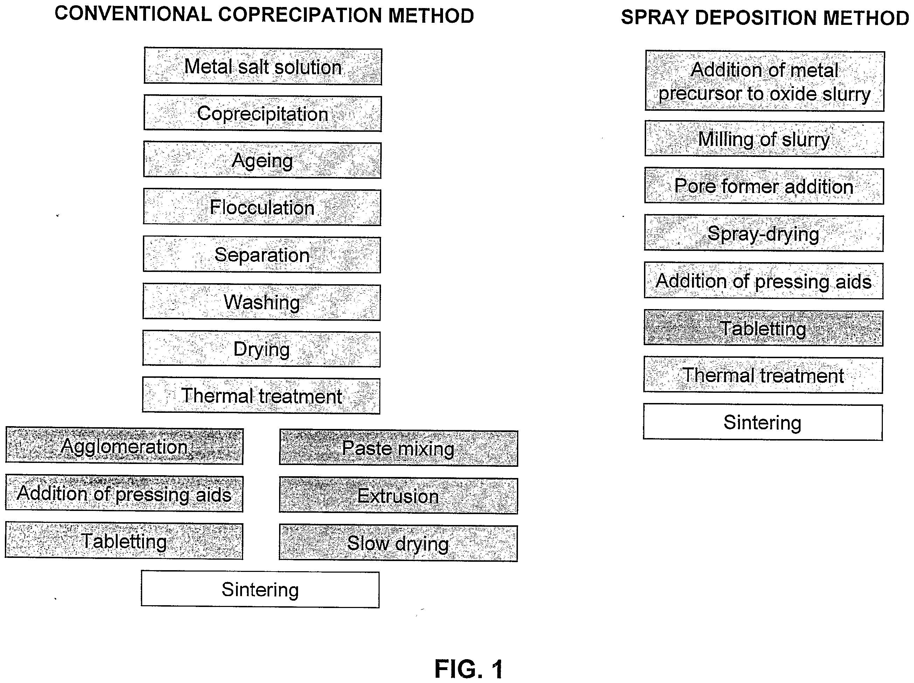

These and other objects of the invention are obtained with the method as defined by the patent claims. The invention will be further explained with reference to the accompanying drawings, Figures 1-9, wherein
- Figure 1.: shows a comparison of unit operations between a conventional co-precipitation method to prepare supported oxide catalysts and the spray-deposition method (SDM) as described in this application.

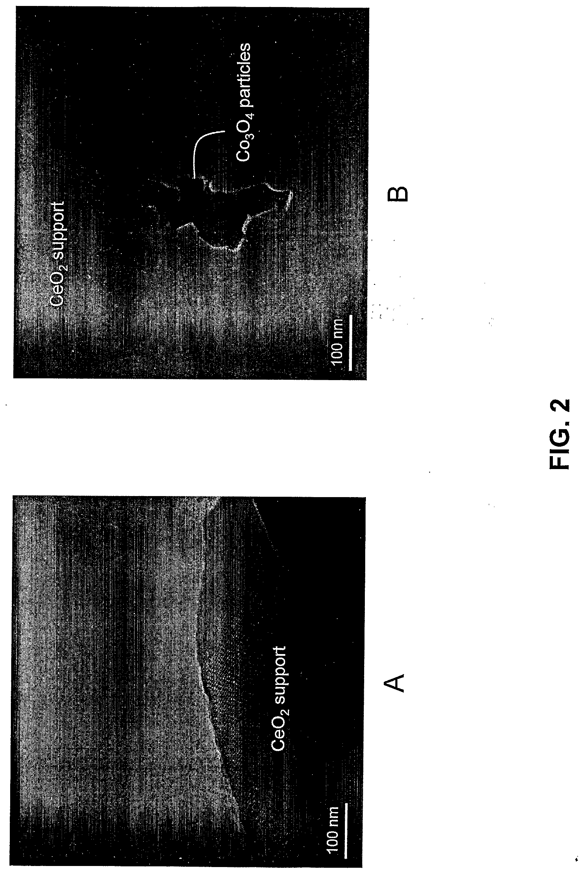

- Figure 2.: shows the TEM micrographs of Co/CeO₂ catalysts prepared by SDM with different metal dispersions, by using (A) a soluble cobalt precursor (high dispersion) or (B) an insoluble cobalt precursor (low dispersion).

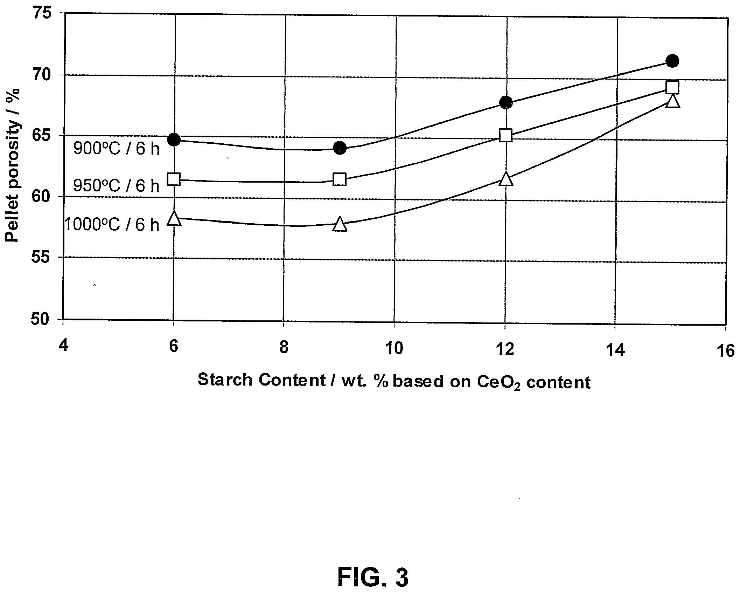

- Figure 3.: shows the porosity of Co/CeO₂ catalysts (cylindrical pellets of 5 mm×5 mm) prepared by SDM as a function of the starch content (based on the Ce02 content) after sintering for six hours at different temperatures

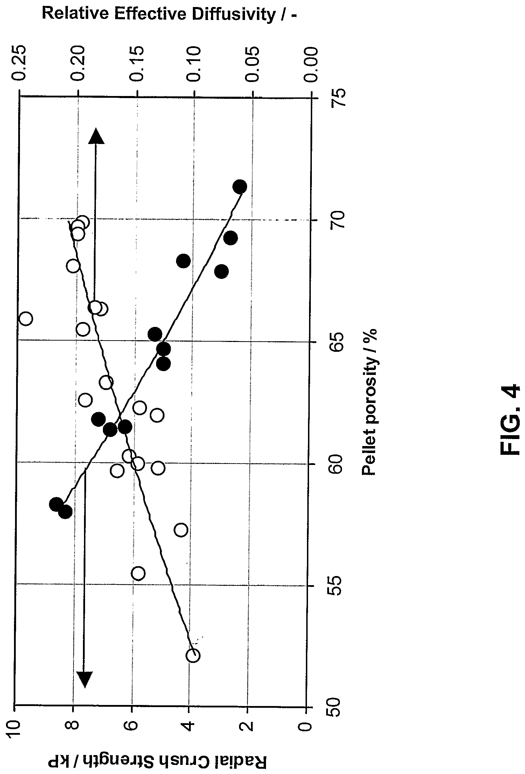

- Figure 4.: shows the effect of catalyst porosity on the effect gas diffusion coefficient and radial crush strength of Co/CeO₂ catalysts (cylindrical pellets of 5 mm×5 mm) prepared by SDM.

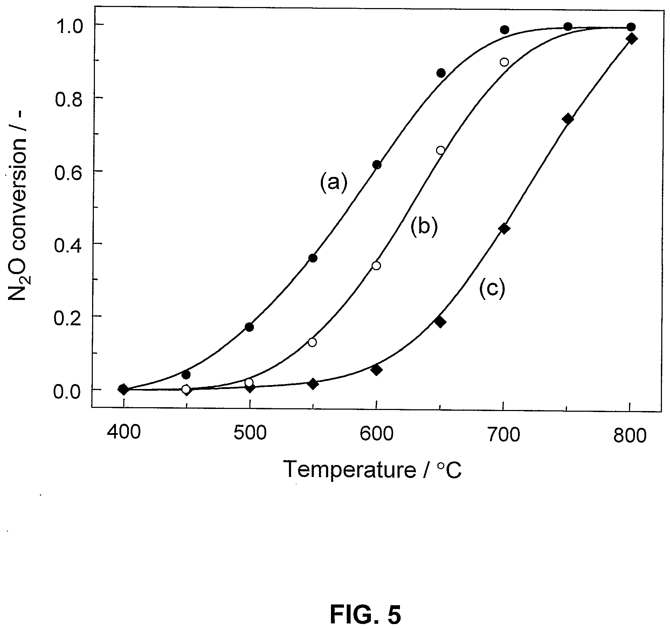

- Figure 5.: shows the N₂O conversion vs. temperature in lab-scale tests over Co/CeO₂ catalysts (125-200 µm particles) prepared by different methods (a) SDM with soluble cobalt precursor, (b) SDM with insoluble cobalt precursor, and (c) incipient wetness. Experimental conditions: Feed = 3 mbar N₂O, 20 mbar NO*ₓ*, 80 mbar O₂, 50 mbar H₂O, Total pressure = 2 bar, Gas-hourly space velocity = 140,000 h⁻¹.

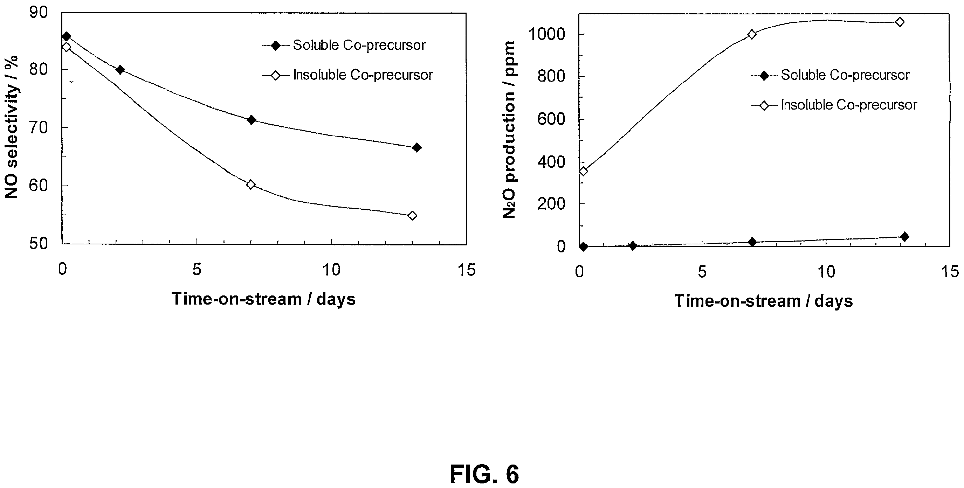

- Figure 6.: shows the NO selectivity and N₂O production vs. time-on-stream during ammonia oxidation in pilot-scale tests over Co/CeO₂ catalysts (cylindrical pellets of 3 mm×3 mm) prepared by SDM with a soluble cobalt-precursor and with an insoluble cobalt-precursor. Experimental conditions: Feed = 10.5 vol.% NH₃ in air, Temperature = 900°C, Total pressure = 5 bar, Gas-hourly space velocity = 60,000 h⁻¹.

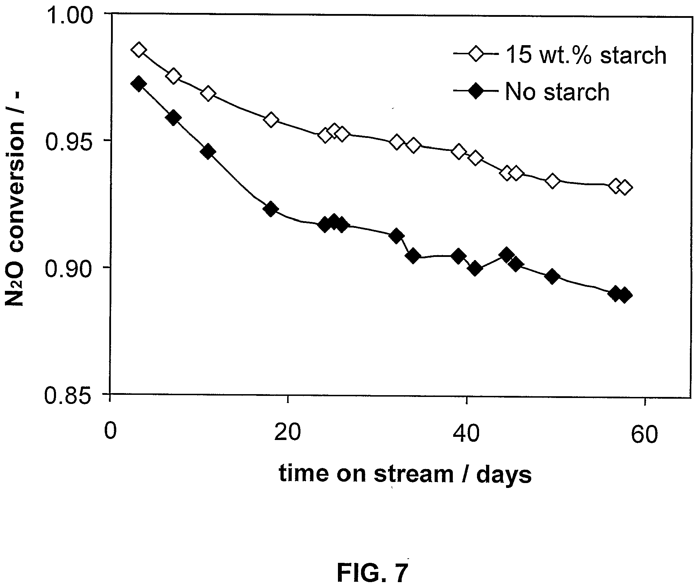

- Figure 7.: shows the N₂O conversion vs. time-on-stream in pilot-scale tests over Co₂AlO₄/CeO₂ catalysts (cylindrical pellets of 5 mm×5 mm) prepared by SDM with a soluble cobalt-precursor, with or without the addition of cornstarch. Experimental conditions: Feed = 6.5 mbar N₂O, 50 mbar NO*ₓ*, 30 mbar O₂, 80 mbar H₂O, Temperature = 900°C, Total pressure = 5 bar, Gas-hourly space velocity = 100,000 h⁻¹.

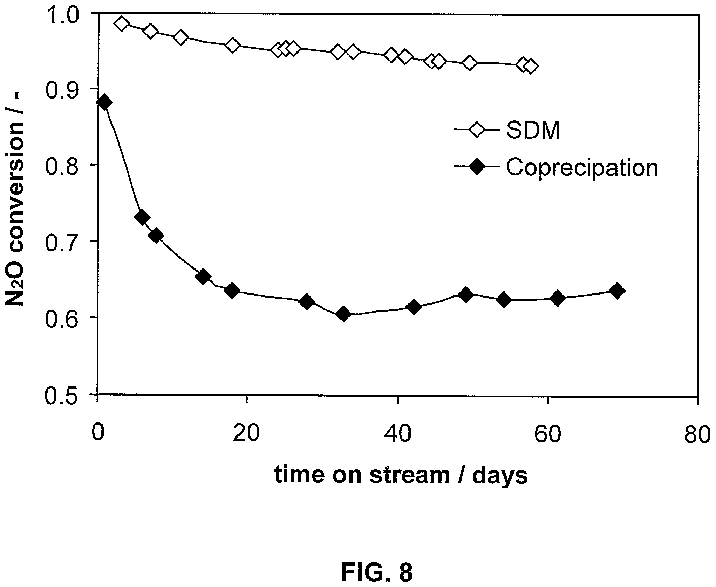

- Figure 8.: shows the N₂O conversion vs. time-on-stream in pilot-scale tests over Co₂AlO₄/CeO₂ (cylindrical pellets of 5 mm×5 mm) prepared by SDM with soluble Co-precursor and cornstarch and by co-precipitation. Experimental conditions: Feed = 6.5 mbar N₂O, 50 mbar NO*ₓ*, 30 mbar O₂, 80 mbar H₂O, Temperature = 900°C, Total pressure = 5 bar, Gashourly space velocity = 100,000 h⁻¹.

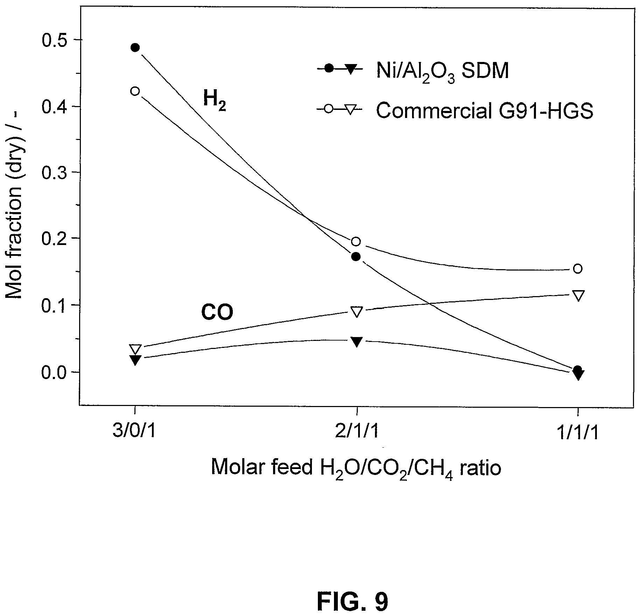

- Figure 9.: shows the activity of Ni/Al₂O₃ prepared by SDM in steam reforming of methane in lab-scale, and comparison with a commercial Ni-based catalyst (G91-HGS, Sud-Chemie). Tests were carried out with catalyst particles of 300-500 µm. Experimental conditions: Temperature = 650°C, Feed = Different H₂O/CO₂/CH₄ ratios, Total gas flow = 125 N1 h⁻¹, 2 g catalyst + 10 g α-Al₂O₃ (diluent), Total pressure = 25 bar, Weight-hourly space velocity = 1000 N1 h⁻¹ g⁻¹, Catalyst pretreatment = pure H₂ at 600°C for 12 h.

The invention concerns a method for preparation of porous supported catalyst materials for N₂O decomposition, wherein a soluble cobalt precursor is added to a slurry of cerium oxide and processing aids in water. The slurry is thereafter milled to a particle size less than 10 µm, a pore former is added, the pore former is starch, cellulose, or polymer fibers or spheres, the viscosity is adjusted to about 1000 cP, before the slurry is spray dried, with subsequent compaction, the pore former is removed and the product is sintered. It is preferred to pre-treat the sintered material in hydrogen, a reducing gas or inert gas.

The pore former is preferably cellulose, starch or polymer fibres and is removed at 10-20 mbar of O₂ diluted in inert gas at 300-400°C. The heating rate is preferably as low as possible, typically 1°Cmin⁻¹.

According to the invention, cerium oxide is used as support phase and cobalt is used as active phase metal.

The active phase precursor is one or more selected from acetates, nitrates, sulphates, oxalates, acetylacotonates, preferably acetates. The active phase cations could be complexed to an organic phase before addition to the support slurry. It is also possible to carry out a partial complexion of the cations wherein a partial complexion of the cations is carried out to prevent formation of large crystals.

The processing aids added could be dispersants, binders, plasticisers, lubricants, pH modifiers etc.

Zirconia and/or a soluble aluminium compound could be added. It is preferred to use cobalt acetate as precursor.

The material produced according to the method could be used for example as catalyst material for N₂O decomposition, ammonia oxidation or steam reforming of methane.

### Detailed description of the invention

Described is a simple, inexpensive, reproducible, versatile, and easy-to-scale-up method to prepare high quality porous supported materials for catalytic applications. This is referred to as spray deposition method (SDM). The unit operations in SDM are compared with a typical co-precipitation method in Figure 1.

The main feature of the SDM is the introduction of a single basic unit operation, *i.e.* spray drying, to carry out a large number of catalyst preparation unit operations simultaneously:
*i)* depositing the metal precursor/s onto the support homogeneously in one step.
*ii)* drying the catalyst precursor (avoid downstream solid-liquid separation by *e.g*. filtration, centrifugation).
*iii)* incorporation of processing aids (dispersants, binders, plasticisers, lubricants, pH-modifiers, etc.)
*iv)* granulation of the powder to produce a ready- to - press - powder

Once an active species and its support have been selected, the task is to construct from precursors of these active species a catalytic structure whose properties and characteristics will meet the demands of an industrial user. The scalability of the spray-deposition method has been proven in a multi-ton scale, for the production of N₂O decomposition catalysts. Methods such as co-precipitation and impregnation/ion-exchange lead to severe technical problems during scaling up compared to SDM. Other methods, such as sol-gel, grafting (anchoring), heterogenisation of complexes, and deposition-precipitation are so far laboratory curiosities applicable to a limited amount of formulations. Catalysts synthesized via these routes are not manufactured in industrial scale.

In the spray deposition method, a soluble active phase precursor is first added to a slurry consisting of the support phase in water or other organic solvent, in appropriate amounts and concentrations. The slurry is wet-milled in a continuously stirred media mill, or a ball mill, to reduce the particle size of the support phase, preferably to less than 1 µm, thus achieving a stable dispersion. Processing aids such as dispersants, binders, plasticisers, lubricants, and pH modifiers, to condition the catalyst for shaping, may be added prior to, or after milling. After milling a pore forming phase, such as starch, cellulose or polymer fibres may be added to the slurry. The slurry is spray dried to produce granules, which are suitable for forming, by die compaction, *i.e.* with a size distribution from 50 to 400 µm.

According to the invention, a soluble cobalt precursor is added to a slurry of cerium oxide and processing aids in water, the slurry is milled to a particle size less than 10 µm, a pore former is added, wherein the pore former is starch, cellulose, or polymer fibers or spheres;the viscosity is adjusted to 1000 cP, before the slurry is spray dried, with subsequent compaction, the pore former is removed and the product is sintered.

The extremely rapid drying process, achieved during spray drying results in an active phase precursor deposited onto the surface of the support phase, uniformly throughout the spray dried granule. This step is crucial to develop a close contact between active phase and precursor, leading to a homogeneous distribution of the metals in the final catalyst. Subsequently, the material is pressed. Removal of the pore forming-substances should be carried out in a controlled atmosphere (10-20 mbar of O₂ diluted in an inert gas such as N₂, He, or Ar). The thermal decomposition of the pore forming phase in an oxidizing atmosphere, may be catalysed by the metal in the active phase, leading to thermal runaways. This not only happens in the case of the oxidation of starches and cellulose, which are known to be exothermic. Many polymer processing additives which decompose endothermically, even when heated in air, such as polymethyl methacrylate (PMMA), decompose exothermically when heated in contact with catalyst phases. The method found for removal of pore formers is also considered as a novel aspect within this invention, which is generally applicable in catalyst production. After this process the material is sintered at high temperature, leading to the final catalyst. The uniformity of distribution of the active phase in the spray-dried granules is retained in the final catalyst pellet product.

The spray-deposition method requires 3-5 unit operations less than conventional methods, e.g. co-precipitation and impregnation (see Figure 1). Some unit operations in the novel method are multi-purpose, making it very attractive (see above).

Another feature of the spray-deposition method is the possibility to prepare multimetallic catalysts with a high dispersion of the components. This makes it attractive for *e.g*. bifunctional catalysis or promoted-reactions. The classic co-impregnation or successive impregnation of two metallic salts proves to be unsatisfactory with respect to the close interaction between two metals. New techniques are being tried. In all cases these techniques call for the preparation of a monometallic catalyst (*i.e.* parent catalyst), which is then modified by addition of the second metal. This modification occurs through a selective reaction, which takes place solely on the monometallic particles of the parent catalyst. SDM offers, via a single-pot operation, a simple way to overcome this difficult and time-consuming preparation, achieving a very close contact of the metals implicated.

For the synthesis of supported bimetallic phases, the spray deposition synthesis route can be further enhanced by complexing the active phase cations to an organic phase, prior to addition to the support slurry. This is a modification of the well-known Pechini method, for the production of mixed metal oxides, where cations are complexed with an organic molecule, which undergoes a polymerisation process. This approach leads to the formation of a precursor phase, which contains a random dispersion of metal ions, which is then deposited onto the support during the spray drying process. This allows the formation of a mixed oxide phase at low temperatures. Suitable complexing agents include citric acid, glycine, EDTA, etc.

If the active phase concentration is high, during the drying process, large crystals of the active phase may develop within the granule. This may be avoided by the addition of a small concentration of a mono-dentate complexing agent, such as triethanolamine (TEA). The quantity should be less than the quantity sufficient to fully complex the active phase cations, preferably sufficient to allow complexing of each cation by only a single molecule of the complexing agent. The result of this partial complexation of the cation is that it prevents the formation of large crystals of the active phase precursor due to disruption of the crystal lattice.

The SDM is versatile to operate both continuously or batch-wise, which contrasts with the high demands to make a co-precipitation method continuous. Scaling from pilot to full-scale production is relatively simple for the SDM process, and this has been demonstrated. The most important unit operations, slurry milling and spray drying are standard operations in ceramic processing and are well understood.

The spray-deposition method is very suitable for the generation of a homogeneous distribution of catalyst components or for the creation of precursors with a definite stoichiometry. The final catalyst consists of small and dispersed mixed crystallites of the components, as a consequence of the good contact of active phase (*e.g.* in bimetallic systems) and support before and after the spray drying/deposition step. Co-precipitation also leads to high dispersions, but the technological demands are much higher, as well as the difficulties in following the quality of the precipitated product and the problems in maintaining a constant product quality throughout the whole precipitation process. The superior performance of the spray deposited catalyst compared to other method has been proven for the decomposition of N₂O over Co-based catalysts.

The SDM process also allows the macro-structure of the finished catalyst (pore size and pore volume) to be precisely engineered to give the optimum performance. Strong pellets with porosity of 70% have been produced using this method.

### Catalyst Production Method

The following describes the catalyst production method, named the "Spray Deposition Method" . The production method is described with reference to the production of a N₂O decomposition catalyst containing a pore-forming phase. Other catalytic applications are also highlighted. The effect of the pore forming phase on the gas transport properties of the catalyst will also be described. Subsequently, the detailed description of each unit operation in the SDM method displayed in Fig. 1 is described for a Co-Al/CeO₂ catalyst.

### Slurry

An aqueous slurry of a cerium oxide or other support phase is prepared by adding the *as-supplied* cerium oxide powder, with an agglomerate size *d*₅₀ typically in the range of 10 to 20 microns, to water. Vigorous stirring is used to disperse the slurry and to prevent sedimentation. To this slurry, polyvinyl alcohol (PVA) is added, in the form of a 5 to 10 wt.% aqueous solution. It is generally necessary to heat the PVA solution to dissolve the PVA. After the PVA is added to the slurry, it is stirred for 12 hours. This allows the PVA to adsorb onto the surface of the cerium oxide. The role of the PVA is two-fold. In the slurry, it acts as a steric stabiliser for the cerium oxide, reducing the tendency for sedimentation. At a later stage in the production it acts as a temporary binder for the spray dried granules.

To the cerium oxide slurry, cobalt acetate, aluminium hydroxyacetate and zirconia are added, with vigorous stirring. For some formulations, nitrate or other salts may be used. The slurry is milled using a bead or continuous stirred media mill, to reduce the agglomerate size of the cerium oxide, such that the *d*₅₀ is reduced to 0.1-10 microns (pre-ferrably 1 micron). This results in a slurry that is stable towards sedimentation, which is a practical advantage, and it may improve the performance of the catalyst through an improved uniformity of the catalyst. The viscosity of the slurry should be kept between 100-5000 cP, preferably about 1000 cP.

### Pore-former

To the stable slurry, the pore-forming phase is added. Cornstarch, which has a mean grain size of 10 to 15 microns, was used. The size of the pores may be controlled by the choice of the starch. Other starches such as rice or potato may be used to give smaller or larger pores, respectively. Pore-forming phases other than starch may also be used. Avicel microcrystalline cellulose, have been successfully used in the production of catalysts, using the SDM technique.

In principal, any material which is both insoluble and thermally decomposes without leaving an inorganic residue may be used. In the past microcrystalline cellulose have been used, as an alternative to starch, although in that case no advantage was found. Polymers spheres or fibers may also be used, but difficulties may be experienced in the thermal treatment, if they melt before thermal decomposition. The starch is added after the milling process so that the grain structure of the starch, which governs the pore size, is retained. The water content of the slurry is adjusted so that the viscosity of the slurry is 1000cP

### Spray-drying

Spray drying has been carried out in pilot scale, using a two-fluid atomiser and rotary atomisers. Full-scale spray drying has been carried out, using both rotary and high-pressure atomisers. In each case, no serious problems were encountered and good, flowable powder was always produced. An observation was made during the full-scale production, that when using the high-pressure atomiser in a counter-current mode, too high an inlet temperature could lead to ignition of the powder. In this case, inlet temperatures greater than 400°C were used. The counter-current mode is not ideal for heat sensitive materials. Therefore, either the inlet temperature should be lower, leading to a reduction in the production rate, or a co-current spray mode should be used.

In the in-house pilot trials, the inlet temperature was typically from 250 to 180°C, depending on the injection rate of the slurry, and the outlet temperature was typically in the range of 105 to 110°C. This led to a moisture content of 0.2 to 0.5% and a mean granule size with a *d*₅₀ of 60 to 80 microns.

### Compaction

Prior to compaction, 0.5 % aluminium stearate was added to the spray dried powder and the water content was adjusted to between 0.5% to 2%. This was carried out in a Forberg mixer. The water acts as a plasticiser for the PVA and the optimum water content is dependant on the exact catalyst formulation. The surface area of the cerium oxide and the grade of PVA will have an effect on the level of water that is required. The pellets were compacted by uni-axial pressing on a Pentronix PTX 612 press. For pellets of 5mm or less, the single-action anvil mode is acceptable, but for larger pellets, such as the 9mm minilith, double action press operation is required. The compression ratio (ratio between fill depth and pressed tablet height) is typically 2.2.

### Removal of pore former

After pressing, the pellets are subjected to thermal treatment to remove the pore-forming phase, and afterwards they are sintered to produce the finished catalyst pellet. The thermal treatment to remove the pore forming starch is the most critical and demanding step in the production. Heating the starch-containing pellets in air leads to a rapid temperature rise in the pellet bed and an uncontrolled combustion of the starch, which has a deleterious effect on the integrity of the pellets . Heating the pellets in nitrogen, in which a small quantity of air is added, controls the starch removal. The range of the oxygen concentration is between 0.1 and 0.5 vol.% at the early stages. At all stages of the starch removal, the main decomposition products of the starch are CO₂ and water vapour, even when the oxygen content is 0.5%.

Once the bulk of the starch is removed, as evidenced by an absence of CO₂ in the tail gas, the oxygen content is increased to 20 vol.%. Starch consists of two polymers; one decomposing around 170°C and the other between 250 and 300°C. The heating rate should be as low as possible, typically 1°C min⁻¹. The pellets are loaded into perforated baskets and the nitrogen - oxygen gas mixture flows through the bed of pellets, from below. The gas is heated prior to flowing through the pellets. The pellet temperature is controlled by the temperature of the gas and by the oxygen content. In operation, the bed temperature is more sensitive to the oxygen content than the gas inlet temperature, so this is the means by which temperature is controlled during the decomposition. The first stage is to heat the pellets in 0.1 vol.% oxygen to 170°C. Once a stable temperature is achieved, the oxygen content is slowly increased. The progress of the reaction may be followed by observing the temperature rises in the baskets, which are located vertically in-series. Once the decomposition of the first starch polymer is complete, the oxygen content is reduced and the temperature is increased to 250°C. Once a stable temperature is achieved, the oxygen content is again increased, until the second decomposition step in all the baskets is complete. The temperature is increased to 300°C and the oxygen content is increased to 20%, until no reaction is observed. The baskets are cooled overnight in flowing oxygen. The total time for this process is typically 2 ½ days.

After removal from the pore former burnout oven, the baskets are placed in a vertical tube furnace. They are heated in air at 1°C min⁻¹ to 950 to 1000°C. After 6 to 12 hours at the maximum temperature the furnace is cooled. This sintering process typically takes 2 days. The sintered pellets are the finished product.

The invention will be further illustrated by the following examples:

### Example 1. Preparation of Co/CeO₂ catalysts with different distribution of active phases and metal loadings via SDM

**Example 1a.** Catalyst with high dispersion of cobalt oxide supported on cerium oxide An aqueous slurry of a cerium oxide support phase was prepared by adding 5 kg of the as-supplied cerium oxide powder (Rhodia HSA15), with an agglomerate size *d*₅₀ typically in the range of 10 to 20 µm, to 5 1 of water, containing 40 g of Rhodoviol 25/140 PVA. Vigorous stirring was used to disperse the cerium oxide and it was then stirred for 15 h to allow the PVA to adsorb onto the surface of the cerium oxide.

To the cerium oxide slurry 289 g of cobalt acetate (Fluka) was added, with vigorous stirring. The slurry is milled using continuous stirred-media mill, to reduce the agglomerate size of the cerium oxide, such that the *d*₅₀ is less than 1 µm.

The water content of the slurry is adjusted so that the viscosity of the slurry is 1000 cP. Typically, the moisture content of the slurry is 40 to 50%.

Spray drying may be carried out in a dryer with a rotary atomiser. The inlet temperature was typically from 180 to 400°C, depending on the injection rate of the slurry, and the outlet temperature was typically in the range of 105 to 110°C. This led to a moisture content of 0.2 to 0.5 wt.% and a granule size with a *d*₅₀ from 60 to 200 µm, depending on the type of atomiser.

Prior to compaction, 0.5 wt.% aluminium stearate was added to the spray dried powder and the water content was adjusted to 0.5 wt.%. This was carried out in a Forberg mixer. The water acts as a plasticiser for the PVA and the optimum water content is dependant on the exact catalyst formulation. The surface area of the cerium oxide and the grade of PVA will have an effect on the level of water that is required. The pellets were compacted by uni-axial pressing on a Pentronix PTX 612 press. Seven-holes miniliths (dₘ= 9 mm, dₕ = 1.7 mm) were produced. A range of pellet geometries can be produced, from simple cylinders to multi-cored pellets. The pressed pellets were sintered in air, using a conventional muffle oven. The pellets were heated at 1°C min⁻¹ to 900-1000°C, and held at the maximum temperature for 6 to 12 h. The chemical composition of the final catalyst was 1.9 wt.% Co₂O₃ and 98.1 wt.% CeO₂.

### Example 1b. Not according to the invention. Catalyst with low dispersion of cobalt oxide supported on cerium oxide

A cerium oxide slurry was prepared, as described in Example 1a, using 5 kg of cerium oxide (Rhodia HSA15) and 5 1 of water, containing 40 g of dissolved Rhodoviol 25/140 PVA. To the aqueous cerium oxide slurry, 93 g of cobalt oxide (Co₃O₄, Merck) was added, with vigorous stirring. After stirring for 1 h, to ensure uniform dispersion of the cobalt oxide, the slurry was milled using a bead mill, to reduce the agglomerate size of the cerium oxide, such that the *d*₅₀ is less than 1 µm. The water content of the slurry was adjusted so that the viscosity of the slurry is 1000 cP. Spray drying, lubricant addition, pellet pressing and sintering are carried out as described in Example 1a. The chemical composition of the final catalyst was 2.0 wt.% Co₂O₃ and 98.0 wt.% CeO₂.

Figure 2 shows the different constitution of the catalysts with respect to the active phase, depending on the nature of the cobalt precursor used in the preparations. The use of a soluble cobalt precursor (cobalt acetate, Example 1a) leads to a highly dispersed catalyst (Figure 2A). No cobalt oxide entities were observed in high-resolution transmission electron microscopy, which indicates cobalt oxide particles below 1 nm. When an insoluble cobalt precursor was used (Co₃O₄, Example 1b) is used, large agglomerates of cobalt oxide are observed on the Ce02 support (Figure 2B), indicating a poorer dispersion of the active phase in the final catalyst. The different cobalt constitution will certainly influence catalytic performance of the materials, as shown in Examples 4 and 5.

### Example 2. Not according to the invention. Preparation of Ni/Al₂O₃ catalyst via SDM

A nickel oxide catalyst supported on gamma-alumina may be prepared using the method described in Example 1a. 40 g of Rhodoviol 15/140 PVA was dissolved in 5 litres of water. To this was added 5 kg of gamma alumina (Sigma - Aldrich), with vigorous stirring. The slurry was stirred for 15 hours, and then 3.715 kg of nickel nitrate (Fluka) was added to the alumina slurry. After stirring for 1 hour, the slurry was milled using a bead mill to achieve a *d*₅₀ of 1 micron. The moisture content of the slurry after milling was 42.9% and the viscosity was 960 cP, which was suitable for spray drying.

The slurry was spray dried and pelletised, following the procedure described in Example 1a. The pellets were sintered in a standard muffle oven, in air. The pellets were heated at 1°C·min⁻¹ to 700°C, and held at this temperature for 6 hours. The chemical composition of the final catalyst was 16.6 wt.% NiO, 83.4 wt.% Al₂O₃.

### Example 3. Preparation of Co/CeO₂ catalysts with different porosities via SDM

The SDM of producing catalysts allows the production of catalysts with controlled pore volumes and sizes. This is achieved by incorporating a fugitive pore-forming phase, such as starch, cellulose or a polymer, in the catalyst slurry, prior to spray drying. After pressing, the spray-dried granules into pellets or tablets, the pore-forming phase is removed using controlled thermal treatments.

An aqueous slurry of cerium oxide and cobalt acetate, as described in Example 1a, was prepared and milled to the correct particle size. To the slurry a fugitive pore-forming phase, cornstarch (Collamyl), was added with rapid mixing. The slurry, containing the catalyst phases and the cornstarch pore-forming phase is spray-dried, using the techniques described in example 1b. After the addition of aluminium stearate lubricant, and the adjustment of the moisture content of the spray dried granules, pellets or tablets were produced by uni-axial die compaction, as described in Example 1a.

To create the controlled porosity whilst maintaining the mechanical integrity of the pellets, the pore forming phase must be removed in a controlled manner. This is achieved by thermal oxidation of the pore former in a low partial pressure of oxygen. The atmosphere consists of air diluted in nitrogen, such that the concentration of oxygen lies between 0.1 to 2 vol.%. Cornstarch consists of two distinct polymers, amylose and amylopectin. Amylose consists of a linear chain of alpha linked glucose and amylopectin consists of a branched polymer of alpha linked glucose. Cornstarch typically consists of 75% amylopectin and 25% of amylose. These two polymers decompose at 240 and 380°C, respectively, when in contact with solids such as alumina. In the presence of an oxidation catalyst, the decomposition temperatures may be reduced by as much as 80 to 100°C. The burnout of the cornstarch from the cobalt / ceria catalyst, prepared by the SDM method, involves the slow heating of a shallow bed of pellets to 170°C. During the heating process a gas consisting of air diluted in nitrogen, such that the concentration of oxygen is below 1 vol.%, flows through the bed. The low concentration of oxygen limits the temperature rise in the pellet bed, due to the oxidation of the amylopectin, to below 50°C. Once the decomposition of the amylopectin is complete, as evidenced by low levels of carbon oxides in the tail gas, the temperature is slowly increased to 300°C and the temperature is maintained until the decomposition of the amylose is complete. Once the starch is removed, the pellets are heated in air to 900 to 1000°C, to sinter them.

The starch content of the slurry, was varied from 0 to 25 wt.%, based on the mass of the cerium oxide. Catalyst pellets with a higher pore former content can be prepared, but the mechanical properties of the pellets after pore former removal are very poor.

Varying the quantity of the pore forming phase allows the pore volume to be controlled. Figure 3 shows the effect of starch content on pellet porosity in the Co/CeO₂ system (nominal composition: 2 wt.% Co₂O₃ and 98% CeO₂), using different sintering temperatures. As the starch content of the formulation is increased above 9%, the porosity of the pellets increases. Two properties that are critically affected by the porosity of the catalyst are the effective diffusion coefficient within the pellet, compared to the diffusion coefficient of the gas in free space, and the strength of the pellets. These two properties, for the Co/CeO₂ system are shown in Figure 4. An increase in porosity leads to an increase in the effective diffusion coefficient in the pellet with a reduced strength. Hence, the optimum depends on the particular application.

When producing pellets or tablets by compaction or extrusion, in the absence of a pore-forming phase, the porosity is in the range of 40 to 55%, provided sintering temperatures are not very high. The pore size is governed by the size of the primary particles and this will be affected by the degree of milling. The more effective the milling process, the smaller the pore size between particles. However, if the particle size is less than one micron, a large proportion of the porosity will be less than 0.1 to 0.2 microns. By including a pore-forming phase, both the porosity and the pore size may be increased.

### Example 4. Performance of Co/CeO₂ catalysts in direct N₂O decomposition

Co/CeO₂ catalysts (nominal composition: 2 wt.% Co₂O₃ and 98% CeO₂) prepared by different methods have been tested in N₂O decomposition, in the form of 125-200 µm particles. The results are displayed in Figure 5. A clear correlation between the activity of the catalysts and the dispersion of the cobalt phase is achieved. The catalyst prepared by SDM using cobalt acetate as the precursor shows the highest activity, due to the high degree of dispersion of cobalt within this catalyst. The SDM catalyst prepared cobalt oxide as the precursor shows a significantly lower activity, as a consequence of the low dispersion of the active phase, forming large agglomerates of cobalt oxide on the Ce02 support (see Figure 2B). A Co/CeO₂ catalyst prepared by incipient wetness using cobalt acetate leads to the lowest activity, which correlates with the low dispersion achieved using this method.

### Example 5. Not according to the invention. Influence of the cobalt precursor on the performance of Co/CeO₂ catalysts in ammonia oxidation

Co/CeO₂ catalysts prepared by SDM using soluble and insoluble cobalt-precursors have been tested in ammonia oxidation in the form of cylindrical pellets of 3 mm×3 mm (Figure 6). The chemical composition of both catalysts was 20 wt.% Co₂O₃ and 80 wt.% CeO₂. The catalysts show similar initial NO selectivities (∼85%). However, the initial N₂O production in the catalyst prepared using cobalt acetate as the precursor was significantly lower compared to the catalyst prepared using cobalt oxide as the precursor. Furthermore, the stability of both catalysts differs strongly. The Co/CeO₂ catalyst prepared using the insoluble cobalt precursor deactivates much faster, leading to lower NO selectivities and an increased N₂O production.

### Example 6. Influence of the pellet porosity on the performance of Co₂AlO₄/CeO₂ catalysts in N₂O decomposition

CoAl₂O₄/CeO₂ catalysts were prepared by SDM using cobalt acetate as the precursor, with or without addition of cornstarch. The chemical composition of both catalysts was: 1 wt.% Co₂O₃, 0.3 vol.% Al₂O₃, 98 wt.% CeO₂. The catalysts were tested for direct N₂O decomposition in the form of cylindrical pellets of 5 mm×5 mm, in order to evaluate the influence of the pellet porosity in the N₂O decomposition activity. The results are shown in Figure 7. Addition of starch proves beneficial for the performance; the catalyst with starch (pellet porosity of 65%) shows a slightly higher N₂O conversion than the catalyst with 15 wt.% starch (pellet porosity of 50%).

### Example 7. Influence of the preparation method of Co₂AlO₄/CeO₂ catalysts in N₂O decomposition

A CoAl₂O₄/CeO₂ catalyst was prepared by SDM using cobalt acetate as the precursor and with addition of cornstarch (15 wt.%, based on the Ce02 weight). The chemical composition of the final catalysts was: 1 wt.% Co₂O₃, 0.3 vol.% Al₂O₃, and 98 wt.% CeO₂. In addition, a CoAl₂O₄/CeO₂ catalyst was prepared by co-precipitating a solution of Co, Al, and Ce-precursors (soluble) with a base solution of sodium hydroxide and sodium carbonate). The chemical composition of the co-precipitated catalyst was: 42 wt.% Co₂O₃, 13.9 wt.% Al₂O₃, and 42.7 wt.% CeO₂. The activity of the catalysts for N₂O decomposition was evaluated in the form of cylindrical pellets of 5 mm×5 mm. The results are compared in Figure 8. The initial activity of the SDM catalyst and the stability under time on stream is remarkable. A significant deactivation (∼20% of the initial activity in 30 days) is observed in the catalyst prepared by co-precipitation. The high dispersion of cobalt in ceria facilitates a strong interaction between active phase and support, which stabilizes the formulation. This is not achieved by conventional methods, as the coprecipitation method shown in the figure.

### Example 8. Not according to the invention. Performance of Ni-based catalysts in methane reforming

The activity of a Ni/Al₂O₃ catalyst prepared by SDM according to Example 2 in reforming of methane at different feed H₂O/CO₂/CH₄ ratios has been compared to that of a commercial reforming catalyst (G91-HGS, Süd-Chemie). The nickel content in both catalysts was similar: 16.6 wt.% NiO in Ni/Al₂O₃, and 19 wt.% NiO in the commercial catalysts. This catalyst also contains other promoters, like K. Catalytic tests were carried out with 300-500 µm particles), so that intrinsic activities are obtained. The activity of the unpromoted Ni/Al₂O₃ SDM at 650°C, expressed by the molar fraction of the product (dry basis), is higher than that of a state-of-art Ni-commercial catalyst (Figure 9). Methane conversions of 26% (SDM) and 23% (commercial) were achieved. The activity of the SDM catalyst decreases upon increasing the relative CO₂ content in the feed mixture (dry reforming). The activity of the commercial catalyst in H₂O/CO₂/CH₄ = 1/1/1 is higher than over Ni/Al₂O₃ SDM. This can be due to the presence of promoters in the commercial catalyst to reduce the rate of coke formation, while no other metal than Ni was present in the SDM formulation.

The spray deposition method allows the preparation of catalysts with both a uniform distribution of active phase and a uniform and controlled porosity, with some control over pore size. The superior performance of the catalysts prepared by SDM compared to other conventional methods (co-precipitation or impregnation) has been proven in various applications, including direct decomposition of N₂O, ammonia oxidation, and steam reforming of methane.

## Claims

1. Method for preparation of porous supported catalyst materials for N₂O decomposition, wherein a soluble cobalt precursor is added to a slurry of cerium oxide and processing aids in water, the slurry is milled to a particle size less than 10 µm, a pore former is added, wherein the pore former is starch, cellulose, or polymer fibers or spheres;
the viscosity is adjusted to 1000 cP, before the slurry is spray dried, with subsequent compaction, the pore former is removed and the product is sintered.

2. Method according to claim 1, wherein zirconia and/or a soluble aluminium compound is added.

3. Method according to claim 1, wherein cobalt acetate is used as precursor.

## Patentansprüche

1. Verfahren zur Herstellung von porösen Trägerkatalysatormaterialien für die N₂O-Zersetzung, wobei ein löslicher Kobaltvorläufer einem Schlamm aus Ceroxid und Verarbeitungshilfsmitteln in Wasser zugesetzt wird, wobei der Schlamm auf eine Partikelgröße von weniger als 10 µm gemahlen wird, wobei ein Porenbildner zugesetzt wird, wobei es sich bei dem Porenbildner um Stärke, Cellulose oder Polymerfasern oder -kugeln handelt;
wobei die Viskosität auf 1000 cP eingestellt wird, bevor der Schlamm sprühgetrocknet wird, worauf eine Verdichtung folgt, wobei der Porenbildner entfernt wird und das Produkt gesintert wird.

2. Verfahren nach Anspruch 1, wobei Zirconiumdioxid und/oder eine lösliche Aluminiumverbindung zugesetzt werden.

3. Verfahren nach Anspruch 1, wobei Kobaltacetat als Vorläufer verwendet wird.

## Revendications

1. Procédé de préparation de matériaux de catalyseurs supportés poreux pour une décomposition de N₂O, dans lequel un précurseur de cobalt soluble est ajouté à une barbotine d'oxyde de cérium et d'adjuvants de fabrication dans de l'eau, la barbotine est broyée jusqu'à une taille de particules de moins de 10 µm, un agent porogène est ajouté, dans lequel l'agent porogène est de l'amidon, de la cellulose, des fibres ou des sphères de polymère ;
la viscosité est ajustée à 1000 cP, avant que la barbotine ne soit séchée par pulvérisation, avec un compactage ultérieur, l'agent porogène ne soit éliminé et le produit ne soit fritté.

2. Procédé selon la revendication 1, dans lequel de la zircone et/ou un composé d'aluminium soluble est ajouté.

3. Procédé selon la revendication 1, dans lequel de l'acétate de cobalt est utilisé comme précurseur.
